# EUROPÄISCHE PATENTSCHRIFT

(11) **EP 1 403 132 B1**
(45) Veröffentlichungstag und Bekanntmachung des Hinweises auf die Patenterteilung: **28.11.2007**
(21) Anmeldenummer: 03021350.8
(22) Anmeldetag: 20.09.2003
(51) Int. Cl.: B60N 2/46

(54) **Antrieb zur Realisierung einer Schwenk-Kippbewegung für ein Bauteil, insbesondere im Innenraum von Fahrzeugen**
Drive for realising a rotation-tilting for a component, in particular in the passenger compartment of vehicles
Commande pour réaliser une rotation-basculement pour un composant, en particulier dans l'habitacle de véhicules

(30) Priorität: 27.09.2002 DE 20215067 U
(43) Veröffentlichungstag der Anmeldung: 31.03.2004
(73) Patentinhaber: KTSN Kunststofftechnik Sachsen GmbH & Co. KG, 01796 Pirna (DE)
(72) Erfinder: Moosdorf, Peter, 01279 Dresden (DE)
(74) Vertreter: Tragsdorf, Bodo

(56) Entgegenhaltungen:
- DE-A1- 10 014 783

## Beschreibung

Die Erfindung bezieht sich auf einen Antrieb zur Realisierung einer Schwenk-Kippbewegung für ein Bauteil, wie z.B. eines Deckels oder einer Klappe für ein Behältnis, Gehäuse oder Fach, insbesondere im Innenraum von Fahrzeugen.

Im Innenraum von Fahrzeugen sind verschiedene Bauteile vorhanden, die von einer ersten in eine zweite Stellung zu bewegen sind. Nach dem Lösen einer Verriegelung erfolgt die Öffnungsbewegung durch das Eigengewicht des Bauteils oder durch den Antrieb einer Feder.
Aus der DE 297 00 832 U1 ist ein Ausstattungsteil für Kraftfahrzeuge bekannt, das aus einem Einbaurahmenteil und einem an diesem schwenkbeweglich gehaltenem Funktionsteil, einem Aschenbecher, besteht, das in Einbaulage um eine horizontale Achse aus einer Schließlage in eine Öffnungslage bewegbar ist. Zur Realisierung der Schwenkbewegung des Funktionsteils ist an dem Einbaurahmenteil ein elektrisches Antriebsmittel angeordnet. Dieses besteht aus einem Antriebsmotor mit Schneckengetriebe sowie einer Gewindespindel, die mit einer am Funktionsteil befestigten Spindelmutter in Eingriff steht.
Ein Antrieb zum Öffnen und Schließen eines Deckels in einem Kraftwagen ist auch in der EP 1148 201 A2 offenbart. Mittels eines Wegübertragungselementes wird die Antriebsbewegung eines Elektromotors auf den Deckel übertragen.
Die Anordnung separater elektrischer Antriebe ist mit einem zusätzlichen Aufwand und erhöhten Kosten verbunden. Außerdem muss ein ausreichend großer Einbauraum zur Verfügung stehen.
Bekannt ist auch (DE 298 22 840 U1), als Antriebselement für die Öffnungsbewegung einer Schwenkklappe für ein Aufbewahrungsteil, z.B. eines Ablagefaches, im Innenraum eines Kraftfahrzeuges, eine Spiralfeder einzusetzen. In der EP 0894 662 A2 ist ein Deckel für ein Behältnis beschrieben, auf dessen Drehachse eine Schenkelfeder angeordnet ist, um die Bewegung des Deckels aus der Schließstellung in die Öffnungsstellung zu bewirken.

Der nächstliegende Stande der Technik geht aus der DE 10014783 A1 hervor, die einen Antrieb zur Realisierung einer Schwenk-Kippbewegung für ein zu bewegendes Bauteil zeigt, insbesondere im Innenraum von Fahrzeugen, wobei zur Bewegung aus der Schließstellung in die Öffnungsstellung eine Feder angeordnet ist, und wobei der Mechanismus zwei Hebel aufweist, die ein Viergelenk bilden und von denen einer als zweiseitiger Hebel mit einem Kraftarm ausgebildet ist.

Der Erfindung liegt die Aufgabe zugrunde, einen verbesserten Antrieb zur Realisierung einer Schwenk-Kippbewegung für ein Bauteil, insbesondere im Innenraum von Fahrzeugen, zu schaffen.
Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 10.
Die vorgeschlagene Antriebseinheit besteht aus einem Rollfederkörper mit einer Rollfeder sowie einem zweiseitigen Hebel und einem einseitigen Führungshebel, die in getrennten Drehachsen bzw. Lagerstellen gelagert sind. Der zweiseitige Hebel ist länger als der einseitige Führungshebel, wobei an dessen Kraftarm das unter Zugwirkung stehende Ende der Rollfeder befestigt ist. Die in Richtung zu dem zu bewegenden Bauteil, z.B. dem Deckel einer zu verschließenden Öffnung eines Ablagefaches, zeigenden Enden der beiden Hebel ragen über die zu verschließende Öffnung hinaus und sind über jeweils getrennte Lagerstellen mit dem zu bewegenden Bauteil verbunden. Mittels dieser Antriebseinheit wird eine "Viergelenk-Bewegung" realisiert. Die Antriebseinheit ist als kleine kompakte Baueinheit ausgebildet und in einem separaten Gehäuse vormontiert, wobei die mit dem zu bewegenden Bauteil zu verbindenden Hebel die Gehäuseöffnung überragen. Die Antriebsbaueinheit lässt sich kostengünstig herstellen, alle Bauteile, bis auf die Rollfedern, können aus Kunststoff hergestellt werden. Die Antriebsbaueinheit kann für verschiedene zu bewegende Bauteile kleinerer Bauart eingesetzt werden, vorzugsweise für Klappen und Deckel, insbesondere im Innenraum von Fahrzeugen. Die Antriebsbaueinheit erfordert keine gesonderte Energiequelle und ist daher immer betriebsbereit. Sie ist besonders für Fachabdeckungen geeignet, die oft geöffnet und geschlossen werden. Sie zeichnet sich durch einen einfachen konstruktiven Aufbau aus und ist störunanfällig. Im Anwendungsfall für Klappen und Deckel ist es zweckmäßig, wenn an jeweils zwei einander gegenüberliegenden Seiten des die zu verschließende Öffnung begrenzenden Gehäuses eine Antriebsbaueinheit angeordnet wird. Die Montage des Deckels bzw. der Klappe an den jeweiligen Hebelenden erfolgt z. B. mittels einer Rastverbindung. Die entsprechenden Verbindungsstellen sind vorzugsweise als Lagerzapfen mit korrespondierenden Befestigungsöffnungen ausgebildet.
Die kompakte kleine Antriebsbaueinheit kann auf verschiedene Art und Weise in die entsprechenden Gebrauchsgegenstände ein- bzw. angebaut werden, z. B. durch Kleben oder Schweißen an die Seitenwände des Gehäuses oder mittels einer Schraubverbindung. Die Antriebsbaueinheit kann auch in eine dafür vorgesehene Öffnung, z.B. einer Konsolenabdeckung, eingesetzt und in der Einbaulage durch eine Rast- oder Schnappverbindung lagefixiert werden.

In bestimmten Anwendungsfällen, wie z.B. bei sehr kleinen Deckeln, kann es auch ausreichend sein, wenn nur eine Antriebsbaueinheit an einer Seite des die zu verschließende Öffnung begrenzenden Gehäuses für das Fach angeordnet ist und an der anderen, gegenüberliegenden Seite mindestens ein mit der Kinematik der Öffnungs- und Schließbewegung wirkungsgleicher Hebel vorgesehen ist, der mit dem zu bewegenden Bauteil in Verbindung steht.
Der Öffnungswinkel des zu bewegenden Bauteiles kann zusätzlich eingestellt oder verändert werden, indem die Schwenkbewegung des Kraftarmes des zweiseitigen Hebels in Zugrichtung durch ein einstellbares Winkelstellelement oder einen Anschlag begrenzt wird.
Die Antriebsbaueinheit kann auch mit einer Dämpfungsvorrichtung zum gedämpften und gleichmäßigen Öffnen des zu bewegenden Bauteils ausgerüstet werden. Hierzu ist an dem Kraftarm des zweiseitigen Hebels ein Zahnsegment angeordnet, das mit einem dämpfend wirkenden Zahnradelement in Eingriff steht, weiches in dem Gehäuse der Antriebseinheit gelagert ist.

Die Erfindung soll nachstehend an einem Ausführungsbeispiel näher erläutert werden. in der zugehörigen Zeichnung zeigen
- Fig. 1: ein Ablagefach mit einem Deckel in geöffneter Stellung und einer beidseitigen Anordnung der erfindungsgemäßen Antriebe als kompakte Baueinheit zur Realisierung der Öffnungs- und Schließbewegung des Deckels, in perspektivischer Darstellung und
- Fig. 2: eine komplette Antriebsbaueinheit mit Deckel, in vergrößerter Darstellung in Einbaulage, als Längsschnitt.

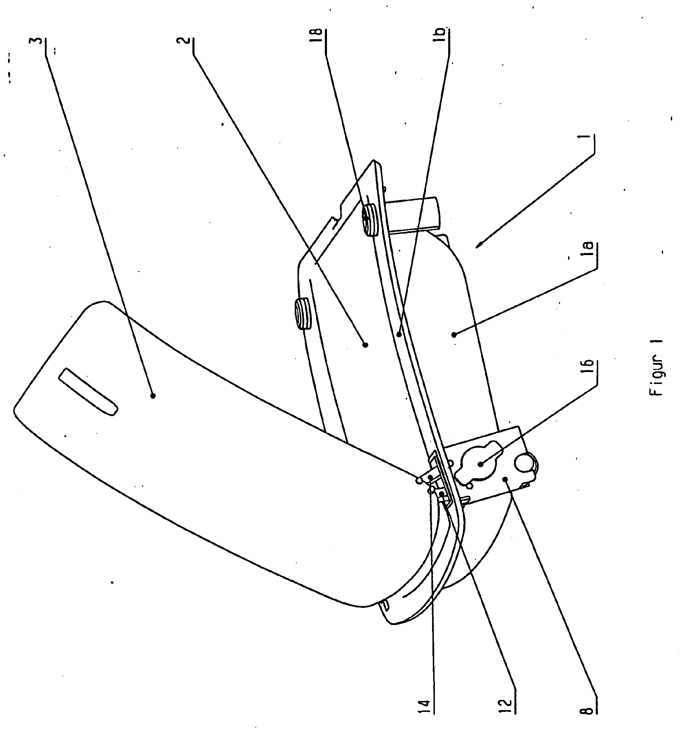

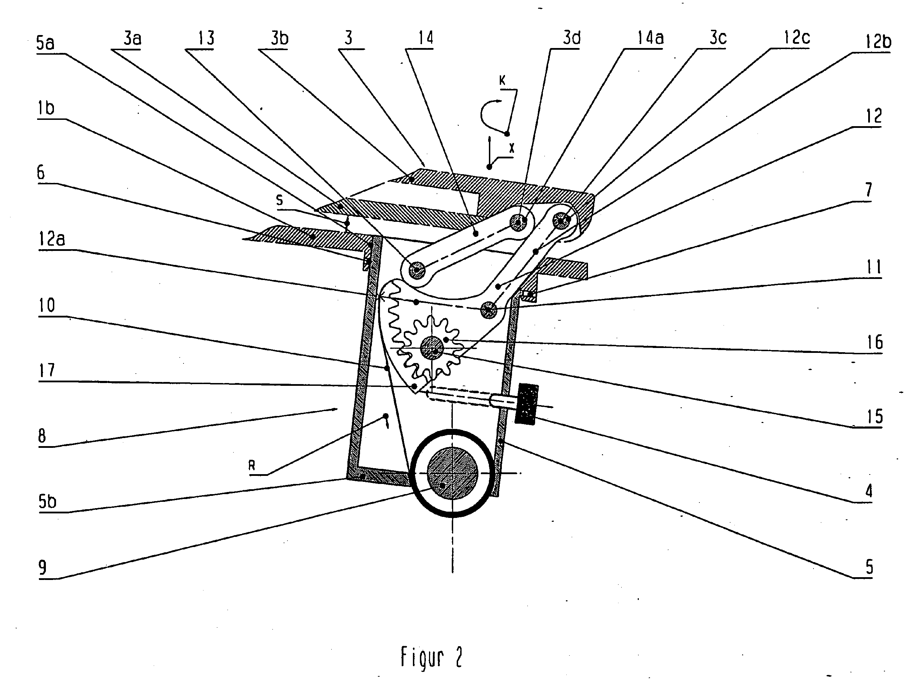

Das in Fig. 1 gezeigte Ablagefach besteht aus einem kastenförmigen Gehäuse 1 und einem die Gehäuseöffnung 2 verschließenden Deckel 3 und einem nicht näher gezeigten, an sich bekannten Verschließmechanismus, z. B. mit einer Push-Push-Entriegelungseinrichtung für den Deckel. Das Ablagefach wird z.B. im Innenraum eines Fahrzeuges in eine in der Mittelkonsole befindliche Öffnung eingesetzt. Der Deckel 3 ist geringfügig größer als die Gehäuseöffnung 2, so dass diese im geschlossenen Zustand des Deckels 3 vollständig abgedeckt ist. Der Deckel 3 ist in zweischaliger Ausführung hergestellt und besteht aus dem Deckelunterteil 3a und dem Deckeloberteil 3b (Fig. 2). Das Gehäuse 1 besitzt einen umlaufenden Rand 1b, der im Bereich der beiden Längsseitenwände 1a jeweils eine kleine schmale Öffnung aufweist, in die je eine separate Antriebseinheit 8 zur Realisierung der Öffnungs- und Schließbewegung des Deckels 3 eingesetzt ist, deren Hebel 12, 14 mit dem Deckel 3 verbunden sind. Um eine sichere und vibrationsfreie Auflage des Deckels 3 während des geschlossenen Zustandes zu gewährleisten, ist an beiden Längsseiten je ein Gummipuffer 18 angeordnet.

In der Fig. 1 ist nur eine Antriebseinheit 8 im hinteren Bereich der Seitenwand 1a zu sehen, die andere identische Antriebseinheit befindet sich an der gegenüberliegenden Längsseite des Gehäuses 1.
im folgenden wird unter Bezugnahme auf die Fig. 2 die Antriebseinheit 8 mit den zugehörigen Antriebselementen näher erläutert. Das aus Kunststoff bestehende Gehäuse 5 ist an seiner nach oben zeigenden Seite offen ausgebildet und besitzt an seinen beiden Schmalseiten, in einem geringen Abstand zum oberen Ende verrastbare Nasen 6, die in entsprechende Öffnungen 7 des Gehäuses 1 eingreifen. Durch die Anlageflächen 5a und der Rast- bzw. Clipsverbindung 6, 7 ist das Gehäuse 5 in seiner Einbaulage stabil gehalten. Das Gehäuse hat z.B. die Abmessung 50x30x10 mm (Tiefe x Höhe x Breite) und schließt in Einbaulage bündig mit der Oberkante des umlaufenden Randes 1 b des Gehäuses 1 ab. Im Bereich des Bodens 5b des Gehäuses 5 ist der Rollfederkörper 9 mit der Rollfeder 10 angeordnet und lagefixiert. Aus Platzgründen ist der Boden 5b des Gehäuses 5 im Bereich der Rollfeder 10 ausgespart, so dass die Rollfeder 10 über den Boden 5b hinausragt. Im oberen Bereich des Gehäuses 5 ist in einem definierten Abstand an einer der Seitenwände ein Lagerzapfen 11 zur Aufnahme eines zweiseitigen Hebels 12 angeordnet, wobei der Lagerzapfen 11 die Drehachse für den Hebel 12 bildet. Am äußeren Ende des Kraftarmes 12a des Hebels 12 ist das freie Ende der Rollfeder 10 befestigt, z.B. durch Einhängen in eine an der Umfangsfläche des Hebels 12 angeformte gekröpfte Nase. Das Ende des Lastarmes 12b des Hebels 12 ragt über die Öffnung, sowohl des Gehäuses 5 als auch des Gehäuses 1, hinaus und besitzt an seinem Ende eine Befestigungsbohrung 12c zur Aufnahme des sich am unteren Abschnitt des Deckels 3 befindlichen Zapfens 3c, der eine erste Drehachse für den Deckel 3 während der Öffnungs- und Schließbewegung bildet. Oberhalb des Lagerzapfen 11 zur Aufnahme des Hebels 12 befindet sich in beiden Seitenwänden des Gehäuses 5 ein zweiter Lagerzapfen 13, der in Richtung zur Gehäuseöffnung in einem definierten Abstand zu dem ersten Lagerzapfen 11 angeordnet ist. Dieser Lagerzapfen 13 ist zur Aufnahme eines einseitigen Führungshebels 14 bestimmt, der in seiner Länge kürzer ist als der zweiseitige Hebel 12. Das andere Ende des Führungshebels 14 ragt ebenfalls über die Öffnung des Gehäuses 5 hinaus und besitzt an diesem Ende eine Befestigungsbohrung 14a, zur Aufnahme eines weiteren, am Deckel 3 befindlichen Zapfen 3d, der in einem definierten Abstand zu dem ersten Zapfen 3c angeordnet ist und eine zweite Drehachse für den Deckel 3 während der Öffnungs- und Schließbewegung bildet. Die jeweiligen Lagerstellen bzw. Drehachsen 11, 13, 3c und 3d für die beiden Hebel 12 und 14 bilden ein Viergelenk, durch das die Kinematik für die Öffnungs- und Schließbewegung des Deckels 3 festgelegt ist.
in bestimmten Anwendungsfällen, wie z. B. bei Ablagefächern mit kleineren Öffnungen und dementsprechend auch Deckeln mit einer geringeren Masse, kann es bereits ausreichend sein, wenn nur eine Antriebsbaueinheit an einer Seite des Ablagefaches angeordnet ist. In diesem Fall ist es zur Stabilisierung des Deckels während der Öffnungs- und Schließbewegung jedoch erforderlich, an der gegenüberliegenden Seite des Faches bzw. des Gehäuses 1 noch einen weiteren Führungshebel drehgelenkig anzuordnen, der mit seinem anderen Ende am Deckel befestigt ist, und in seiner Kinematik dem durch das Viergelenk vorgegebenen Bewegungsablauf der Antriebsbaueinheit folgt.
Die Wirkungsweise zur Realisierung der Öffnungs- und Schließbewegung des Deckels für ein Ablagefach mittels zweier identischer, synchron arbeitender Antriebe ist folgender.
Zum besseren Verständnis erfolgt die nachfolgende Erläuterung nur unter Bezugnahme auf einen Antrieb.
Nach Freigabe der Verschlusseinrichtung für den Deckel 3 wird durch die Zugbewegung der Rollfeder 10 in der mit R gekennzeichneten Richtung über den um die Drehachse 11 schwenkbar gelagerten Hebel 12 zuerst eine Hubbewegung des Deckels 3 in X-Richtung und im weiteren Bewegungsablauf des Hebels 12, bedingt durch die Zwangsführung des Deckels 3 mittels des einseitigen Führungshebels 14, die erforderliche Schwenkbewegung um die Drehachse 13 zur Freigabe der Öffnung 2 des Gehäuses 1 bewirkt. Die Dreh-Kippbewegung K des Deckels 3 ist in der Fig. 2 mit einem Pfeil gekennzeichnet. Aufgrund der Bewegung des Deckels 3 parallel zum Rand 1 b des Gehäuses 1 besteht zwischen der Innenseite des Deckels 3 und der Oberseite des die Gehäuseöffnung 2 umgebenden Randes 1b ein geringer Luftspalt S, der in Fig. 2 vergrößert dargestellt ist. Dieser Luftspalt S kann auch durch eine an der Innenseite des Deckels 3 angeordnete umlaufende Schaumstoff- bzw. Filzdichtung geschlossen werden.
Nach dem Öffnen des Deckels 3 kann dieser durch den Bediener wieder manuell geschlossen werden, wobei der Schließvorgang durch die Gummipuffer 18 gedämpft wird. Durch die Schließbewegung wird die Rollfeder 10 wieder gespannt und bleibt nach dem Verriegeln des Deckels in der gespannten Stellung, bis zur Auslösung der nächsten Öffnungsbewegung durch manuelles Betätigen der Push-Push-Einrichtung. An Stelle der Push-Push-Einrichtung kann auch eine andere bekannte Schließ- bzw. Verriegelungseinheit eingesetzt werden.
Durch die Anordnung eines verstellbaren Winkelstellelementes 4, z.B. an einer der Seitenwände des Gehäuses 5, kann die Schwenkbewegung des Kraftarmes 12a des zweiseitigen Hebels 12 begrenzt und dadurch die maximale Öffnung des Deckels 3 in dem gewünschten Öffnungswinkel eingestellt werden. Alternativ kann hierfür in dem Gehäuse 5 auch ein feststehender Anschlag angeordnet werden.
Erforderlichenfalls kann der Antrieb auch mit einer zusätzlichen Dämpfungseinrichtung ausgerüstet werden, um eine sanfte Öffnungsbewegung des Deckels zu bewirken. Die Dämpfungseinrichtung kann z.B. aus einer Kombination gedämpftes Zahnrad/Zahnsegment bestehen. Wie in den Figuren 1 und 2 gezeigt, ist hierzu an einer der Seitenwände des Gehäuses 5 in einer Lagerstelle 15 ein in seiner Drehbewegung gedämpft wirkendes Zahnradelement 16 angeordnet, dessen Zähne in ein an dem Kraftarm 12a des Hebels 12 angeformtes Zahnsegment 17 eingreifen, um eine gedämpfte Bewegung des Hebels 12 während der durch die Zugbewegung der Rollfeder 10 ausgelösten Öffnung des Deckels 3 zu erzielen.
Gemäß der Darstellung in den beiden Figuren 1 und 2 ist in Längsrichtung, zu den Gummipuffern 18 gesehen, der einseitige Hebel 14 vor dem zweiseitigen Hebel 12 angeordnet. Es ist auch ohne weiteres möglich, die beiden Hebel in umgekehrter Reihenfolge anzuordnen, also erst den einseitigen Hebel 14 und dann den zweiseitigen Hebel 12. Ein Vertauschen der beiden Hebel 12 und 14 wirkt sich vorteilhaft auf die zu realisierende Hubbewegung des Deckels 3 aus.
Bei einer Anordnung von zwei synchron arbeitenden Antriebseinheiten zur Realisierung der Öffnungs- und Schließbewegung für den Deckel eines Ablagefaches, kann es ausreichend sein, wenn nur eine der beiden Antriebseinheiten mit einer Dämpfungseinrichtung ausgerüstet ist.
Das Gehäuse 5 und die in diesem angeordneten Funktionsbauteile, bis auf die aus Federstahlband bestehende Rollfeder 10, können aus Kunststoff hergestellt werden. Der vorstehend beschriebene Antrieb mit zwei Antriebseinheiten ist vorzugsweise für Deckel mit einer Masse von 250 bis 300 g ausgelegt, unter Berücksichtigung der dafür erforderlichen Rollfedergrößen.

## Patentansprüche

1. Antrieb zur Realisierung einer Schwenk-Kippbewegung für ein zu bewegendes Bauteil, insbesondere im Innenraum von Fahrzeugen, wobei zur Bewegung aus der Schließstellung in die Öffnungsstellung eine Feder angeordnet ist, wobei der Antrieb aus einem Rollfederkörper (9) mit einer Rollfeder (10) sowie einem zweiseitigen Hebel (12) und einem einseitigen Führungshebel (14) besteht, wobei die beiden Hebel (12, 14) in getrennten Drehachsen (11,13) gelagert sind und der zweiseitige Hebel (12) länger als der einseitige Führungshebel (14) ist, an dem Kraftarm (12a) des zweiseitigen Hebels (12) das unter Zugwirkung stehende Ende der Rollfeder (10) befestigt ist und die in Richtung zu dem zu bewegenden Bauteil (3) zeigenden Enden der beiden Hebel (12,14) über die zu verschließende Öffnung (2) hinausragen und über jeweils getrennte Lagerstellen (3c, 12c, 3d, 14a) mit dem zu bewegenden Bauteil (3) verbunden sind, und die jeweiligen Drehachsen (11, 13) und Lagerstellen (3c, 3d) ein Viergelenk bilden.

2. Antrieb nach Anspruch 1, **dadurch gekennzeichnet, dass** dieser zur Bildung einer separaten Baueinheit (8) in einem Gehäuse (5) angeordnet ist

3. Antrieb nach einem der Ansprüche 1 oder 2, **dadurch gekennzeichnet, dass** jeweils eine Baueinheit (8) an zwei einander gegenüberliegenden Seiten (1a) des die zu verschließende Öffnung (2) begrenzenden Gehäuses (1) angeordnet ist.

4. Antrieb nach Anspruch 2, **dadurch gekennzeichnet, dass** eine Baueinheit (8) an einer Seite (1a) des die zu verschließende Öffnung (2) begrenzenden Gehäuses (1) angeordnet ist und an der anderen Seite mindestens ein mit der Kinematik der Öffnungs- und Schließbewegung wirkungsgleicher Hebel gelagert ist, der mit dem zu bewegenden Bauteil (3) in Verbindung steht.

5. Antrieb nach einem der Ansprüche 1 bis 4, **dadurch gekennzeichnet, dass** die Baueinheit (8) an dem die zu verschließende Öffnung (2) begrenzenden Gehäuse (1) durch Kleben oder Schweißen oder mittels einer Schraub- oder Klipsverbindung befestigt ist.

6. Antrieb nach einem der Ansprüche 1 bis 5, **dadurch gekennzeichnet, dass** die Lagerstellen an den in Richtung zu dem zu bewegenden Bauteil (3) zeigenden Enden der Hebel (12, 14) als Befestigungsöffnungen (12c, 14a) ausgebildet sind und das zu bewegende Bauteil (3) mit diesen korrespondierende Befestigungszapfen (3c, 3d) aufweist.

7. Antrieb nach einem der Ansprüche 1 bis 5, **dadurch gekennzeichnet, dass** die Lagerstellen an den in Richtung zu dem zu bewegenden Bauteil (3) zeigenden Enden der Hebel (12,14) mit nach innen ragenden Befestigungszapfen ausgebildet sind und das zu bewegende Bauteil (3) mit diesen korrespondierende Befestigungsöffnungen aufweist.

8. Antrieb nach einem der Ansprüche 1 bis 7, **dadurch gekennzeichnet, dass** der Kraftarm (12a) des zweiseitigen Hebels (12) mit einer Dämpfungseinrichtung (15, 16,17) in Verbindung steht.

9. Antrieb nach Anspruch 8, **dadurch gekennzeichnet, dass** die Dämpfungseinrichtung aus einer Kombination Zahnsegment/Zahnrad besteht, wobei an dem Kraftarm (12a) des zweiseitigen Hebels (12) ein Zahnsegment (17) angeordnet ist, das in ein in dem Gehäuse (5) angeordnetes, in seiner Bewegung dämpfend wirkendes Zahnradelement (16) eingreift.

10. Antrieb nach einem der Ansprüche 1 bis 9, **dadurch gekennzeichnet, dass** die Schwenkbewegung des Kraftarmes (12a) des zweiseitigen Hebels (12) in Zugrichtung (R) durch einen Anschlag begrenzt oder mittels eines Stellelementes (4) einstellbar ist.

## Claims

1. Drive for realising a rotation-tilting for an agitated component, in particular in the passenger compartment of a vehicle, with a spring being used to cause movement from the closed position into the open position, with the driving mechanism consisting of a wind-up spring (10) mounted in a wind-up spring body (9) and a two-sided lever (12) plus a one-sided guide lever (14), with the two levers (12, 14) being supported in separate hinge pins (11, 13) and the two-sided lever (12) being longer than the one-sided guide lever (14), and the tension-loaded end of the wind-up spring (10) being fixed to the two-sided lever's (12) power arm (12a), and the ends of the two levers (12, 14) facing the agitated component (3) being protruding from the opening to be closed (2) and being connected by separate supporting points (3c, 12c, 3d, 14a) with the agitated component (3), and the hinge pins (11, 13) together with the respective supporting points (3c, 3d) forming a four-bar linkage.

2. Drive according to claim 1 **characterized in that** the latter is mounted in a casing (5) to form a separate modular unit (8).

3. Drive according to one of the claims 1 or 2 **characterized in that** one modular unit (8) each is arranged at the two opposite sides (1a) of the casing (1) that forms the perimeter of the opening to be closed (2).

4. Drive according to claim 2 **characterized in that** one modular unit (8) is arranged at one side (1a) of the casing (1) that forms the perimeter of the opening to be closed (2), whereat the other side acts as support for a lever that is connected to the agitated component (3), and where the lever's kinematical effect is identical to that of the opening and closing movements.

5. Drive according to one of the claims 1 to 4 **characterized in that** the modular unit (8) arranged at the casing (1) that forms the perimeter of the opening to be closed (2) is fixed by using a glueing or welding process or by means of a screwed or clipped connection.

6. Drive according to one of the claims 1 to 5 **characterized in that** the supporting points located at the lever ends (12, 14) facing the agitated component (3) are designed as mounting openings (12c, 14a) to take up corresponding mounting pivots (3c, 3d) provided at the agitated component (3).

7. Drive according to one of the claims 1 to 5 **characterized in that** the supporting points located at the lever ends (12, 14) facing the agitated component (3) are designed as inward facing mounting pivots to engage with corresponding mounting openings provided at the agitated component (3).

8. Drive according to one of the claims 1 to 7 **characterized in that** the power arm (12a) of the two-sided lever (12) is connected to a damping device (15, 16, 17).

9. Drive according to claim 8 **characterized in that** the damping device consists of a toothed-quadrant-and-wheel combination, where a toothed quadrant (17) is attached to the power arm (12a) of the two-sided lever (12) and engages with a toothed wheel element (16) arranged in the casing (5) to provide a damping effect when being agitated.

10. Drive according to one of the claims 1 to 9 **characterized in that** the tilting travel of the power arm (12a) of the two-sided lever (12) in drawing direction (R) is restricted by a stop motion device or can by adjusted using a regulating mechanism (4).

## Revendications

1. Mécanisme d'entraînement pour la réalisation d'un déplacement oscillo-basculant d'un composant à déplacer, situé notamment dans l'habitacle de véhicules, un ressort assurant le déplacement de la position fermée en position ouverte, le mécanisme d'entraînement se composant d'un élément en ressort col de cygne (9) muni d'un ressort col de cygne (10) ainsi que d'un levier double (12) et d'un levier d'entraînement simple (14), les deux leviers (12, 14) étant logés dans des axes de rotation séparés (11, 13) et le levier double (12) étant plus long que le levier d'entraînement simple (14), l'extrémité du ressort col de cygne (10) soumise à l'effet de traction étant fixée sur le bras de force (12a) du levier double (12) et les extrémités des deux leviers (12, 14) dirigées vers le composant à déplacer (3) dépassant de l'orifice (2) à fermer et étant reliées au composant à déplacer (3) par des points d'appui (3c, 12c, 3d, 14a) à chaque fois séparés, et les axes de rotation (11, 13) et les points d'appui respectifs (3c, 3d) formant un quadrilatère articulé.

2. Mécanisme d'entraînement selon la revendication 1, **caractérisé en ce que** celui-ci est disposé dans un boîtier (5) afin de former une unité modulaire séparée (8).

3. Mécanisme d'entraînement selon l'une quelconque des revendications 1 ou 2, **caractérisé en ce qu'**une unité modulaire (8) est disposée à chaque fois sur les côtés se faisant face (1a) du boîtier (1) délimitant l'orifice (2) à fermer.

4. Mécanisme d'entraînement selon la revendication 2, **caractérisé en ce qu'**une unité modulaire (8) est disposée sur l'un des côtés (1a) du boîtier (1) délimitant l'orifice (2) à fermer et qu'au moins un levier dont l'action est semblable à la cinématique de l'ouverture et de la fermeture et qui est relié au composant (3) à déplacer est logé sur l'autre côté.

5. Mécanisme d'entraînement selon l'une quelconque des revendications 1 à 4, **caractérisé en ce que** l'unité modulaire (8) est fixée sur le boîtier (1) délimitant l'orifice (2) à fermer par collage ou soudage ou au moyen de vis ou de clips.

6. Mécanisme d'entraînement selon l'une quelconque des revendications 1 à 5, **caractérisé en ce que** les points d'appui aux extrémités des leviers (12, 14) dirigées vers le composant (3) à déplacer sont configurés sous forme d'orifices de fixation (12c, 14a) et le composant (3) à déplacer présente des tenons de fixation correspondant à ces derniers (3c, 3d).

7. Mécanisme d'entraînement selon l'une quelconque des revendications 1 à 5, **caractérisé en ce que** les points d'appui aux extrémités des leviers (12, 14) dirigées vers le composant (3) sont équipées de tenons de fixation émergeant vers l'intérieur et le composant (3) à déplacer présente des orifices de fixation correspondant à ces derniers.

8. Mécanisme d'entraînement selon l'une quelconque des revendications 1 à 7, **caractérisé en ce que** le bras de force (12a) du levier double (12) est relié à un amortisseur (15, 16, 17).

9. Mécanisme d'entraînement selon la revendication 8, **caractérisé en ce que** l'amortisseur se compose d'une combinaison de segment denté/roue dentée, un segment denté (17) mordant dans un élément en roue dentée (16) disposé dans le boîtier (5) et dont le déplacement a une action amortie étant disposé sur le bras de force (12a) du levier double (12).

10. Mécanisme d'entraînement selon l'une quelconque des revendications 1 à 9, **caractérisé en ce que** le pivotement du bras de force (12a) du levier double (12) est limité dans le sens de traction (R) par une butée ou qu'il peut être réglé par un élément de réglage (4).
